# EUROPÄISCHE PATENTSCHRIFT

(11) **EP 0 536 631 B1**
(45) Veröffentlichungstag und Bekanntmachung des Hinweises auf die Patenterteilung: **30.08.1995**
(21) Anmeldenummer: 92116709.4
(22) Anmeldetag: 30.09.1992
(51) Int. Cl.: C03B 37/018

(54) **Verfahren zum Herstellen einer Vorform für optische Fasern**
Method for making a preform for optical fibers
Procédé de fabrication d'une préforme pour fibres optiques

(30) Priorität: 07.10.1991 DE 4133173
(43) Veröffentlichungstag der Anmeldung: 14.04.1993
(73) Patentinhaber: KABELRHEYDT AKTIENGESELLSCHAFT, D-41201 Mönchengladbach (DE)
(72) Erfinder: Sommer, Ronald Gilbert Dr., W-4050 Mönchengladbach (DE); Hahn, Gerhard Dr., W-4050 Mönchengladbach (DE); Lisse, Frank, Dr., W-5000 Köln 71 (DE); Yang, Risheng, Dr., W-8630 Coburg (DE); Zamzow, Peter, Dipl.-Ing., W-4630 Bochum (DE)
(74) Vertreter: Mende, Eberhard, Dipl.-Ing.

(56) Entgegenhaltungen:
- DE-A- 3 941 865
- FR-A- 2 241 507

## Beschreibung

Die Erfindung betrifft ein Verfahren zum Herstellen einer Vorform für optische Fasern durch Innenbeschichten eines Quarzrohres mit einer Mantel- und einer Kernschieht. Ein solches Verfahren ist beispielsweise aus der DE-PS 24 63 097 bekannt. In diesem Verfahren wird auf dem Inneren eines Quarzrohres eine Mantel- und Kernschicht abgeschieden, die beim späteren Kollabieren des Rohres zu Mantel- und Kernschicht der optischen Faser werden. Zur Durchführung der Dampfphasen-Reaktion wird SiCl₄ und mindestens ein Dotiermittel in Form einer oxidierbaren Verbindung mittels eines Trägergases dampfförmig vermischt mit Sauerstoff durch das Quarzglasrohr geleitet. Dabei sind insbesondere Wasserstoff und wasserstoffhaltige Verbindungen ausgeschlossen. Die Dampfphasen-Reaktion wird durch eine an der Außenseite des Quarzglasrohres befindliche energieerzeugende Vorrichtung angeregt und zwischen dem Quarzglasrohr und der Vorrichtung eine Relativbewegung ausgeführt. Während der Kern vorzugsweise mit Germanium dotiert ist, um einen erhöhten Brechungsindex gegenüber dem Mantel zu erzielen, ist letzterer u.a. mit Phosphor dotiert. Die Dampfphasen-Reaktion verläuft bei etwa 1000° C. Anschließend wird das Rohr in eine weitere Vorrichtung gebracht um das Rohrinnere zusammenfallen zu lassen (Kollabieren). Dabei wird zunächst bei 1400° C die pulvrige Oxidschicht gesintert, bevor bei einer Temperatur von 1700° C das Kollabieren einsetzt. Dabei wird das Material des gesamten Rohres so weich, daß das Rohr zum Stab zusammenfällt.

Bei einem weiteren Verfahren zur Herstellung einer Vorform wird stromabwärts von der Erhitzungszone eine sichtbare Suspension aus festem oxidischen Material niedergeschlagen. Durch Einstellung der Temperatur innerhalb des Gasstromes wird die Ausbeute gesteuert. Die Suspension schlägt sich an der Innenwand nieder und wird im weiteren Verlauf des Durchganges der Erhitzungszone verglast.

Mittels dieser Verfahren sind hochreine und dämpfungsarme Glasschichten in der optischen Faser zu erzielen. Bei einer genaueren Analyse der einzelnen abgeschiedenen Schichten hat es sich allerdings herausgestellt, daß die Konzentration des Dotierungsstoffes vom Radius der Vorform bzw. der optischen Faser nicht den gewünschten Verlauf annimmt. Die Konzentration schwankt im Bereich bis zu einigen Prozenten innerhalb einer abgeschiedenen Schicht. Es wird vermutet, daß ein Beitrag zur Lichtstreuung in der optischen Faser auch von diesen Inhomogenitäten herrührt.

Der Erfindung liegt die Aufgabe zugrunde, ein Möglichkeit zu finden, Konzentrationsschwankungen der Dotierstoffe während des Fertigungsprozesses auszugleichen. Gelöst wird diese Aufgabe gemäß der Erfindung durch die im Anspruch 1 angegebenen Merkmale.

Der Gegenstand des Anspruchs 1 weist insbesondere die Vorteile auf, daß tatsächlich die Konzentrationsschwankungen ausgeglichen und die Streuverluste in der optischen Faser deutlich zurückgegangen sind.

Vorteilhafte Ausgestaltungen der Erfindung sind in den Unteransprüchen angegeben.

Die Erfindung wird nun anhand eines Ausführungsbeispiels unter Zuhilfenahme der Zeichnung erläutert. Dabei zeigt:
Figur 1 den Brechungsindex in Abhängigkeit vom Radius nach dem Stand der Technik und
Figur 2 ein Brechungsindexprofil nach der Erfindung.

Im modifizierten chemischen Dampfabscheidungsverfahren, auch MCVD-Verfahren genannt, werden in einem Quarzglasrohr aufeinanderfolgende Schichten abgeschieden. Die Zusammensetzung dieser Schichten schwankt je nach dem Verhältnis der im Prozeßgasgemisch vorhandenen Komponenten. Das liegt daran, daß bei einem Durchgang der heißen Zone während der Abscheidung der dotierten Siliciumoxidschichten die zuerst abgeschiedenen Sootteilchen eine andere Zusammensetzung haben als die zuletzt abgeschiedenen. Beim Erhitzen des Prozeßgasgemisches entsteht durch eine externe Wärmequelle SiO₂, GeO₂ und P₂O₅ je nach der Zumischung der Dotierstoffe. Die Ruß- oder Sootteilchen bestehen aus amorphem SiO₂ mit einer sehr großen Oberfläche, wobei das amorphe SiO₂ Einlagerungen von GeO₂, P₂O₅ bzw. Fluor enthält, welche als Dotierstoffe benutzt werden. Durch Thermophorese werden die Rußteilchen an der inneren Quarzrohrwand abgeschieden und bilden dort bei jedem Durchlauf der Erhitzungszone eine Schicht.

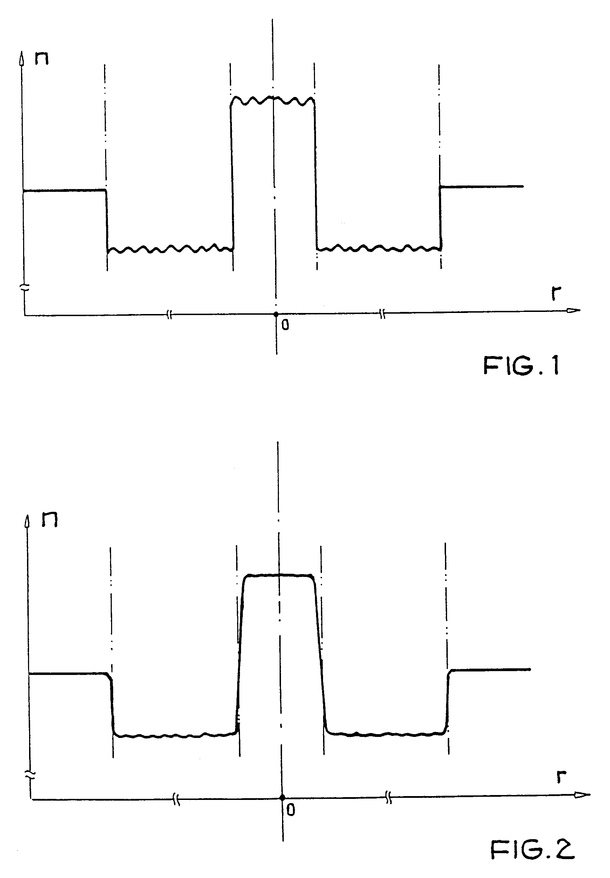

Wie Figur 1 zeigt, ist der Brechungsindex, welcher ein Spiegelbild der Konzentration an Dotierungsstoffen darstellt, in Abhängigkeit vom Radius einer gewissen Schwankung unterworfen.

Die Wirkung der durch die Wärmebehandlung nach vollständiger Abscheidung der Schichten erfolgten Diffusion wird in Figur 2 dargestellt. Die Brechungsindexschwankungen sind praktisch verschwunden. Dies erreicht man dadurch, daß nach dem Abscheiden der Schichten die Rußteilchen einer Wärmebehandlung unterzogen werden, wobei die poröse Oberfläche von einem Prozeßgas durchströmt wird. Als Prozeßgase finden Sauerstoff, Chlor und Helium Anwendung. Vorzugsweise wird eine Mischung von 60 % Chlor und 40 % Helium verwendet, bei einer Temperatur von 1100° C. Nach etwa einer Stunde wird die Temperatur erhöht, so daß die Rußschichten verglasen. Anschließend wird die Temperatur auf etwa 1700° C erhöht und mit dem Kollabieren begonnen. Die fertigkollabierte Vorform kann dann zwischengelagert werden und später zur Faser ausgezogen werden. In einer weiteren vorteilhaften Ausführungsform der Erfindung wird zunächst die Mantelschicht als poröser Körper abgeschieden und zunächst dieser Schichtenaufbau einer Wärmebehandlung unterworfen und homogenisiert. Anschließend wird verglast. Die Temperatur zum Verglasen beträgt etwa 1700° C. Anschließend wird der Kern als poröser Schichtenaufbau abgeschieden, verglast und anschließend das Rohr zum Kollabieren gebracht. Der Vorteil des letzteren Verfahrens besteht darin, daß die Stoffaustauschvorgänge zwischen den einzelnen Schichten schneller vonstattengehen, da die Schichten eine geringere Stärken haben.

## Patentansprüche

1. Verfahren zum Herstellen einer Vorform für optische Fasern durch Innenbeschichten eines Quarzrohres mit einer Mantel- und einer Kernschicht, wobei Mantel- und Kernschicht als poröse Schichten abgeschieden und diese Schichten anschließend einer Wärme- und Diffusionsbehandlung unterworfen werden, während der zur Trocknung und zum Stofftransport Gase in das Innere des Quarzrohres eingeleitet werden, und wobei anschließend die abgeschiedenen Schichten verglast werden, mit einem Ausgleich der Inhomogenitäten der Dotierung und einem Verrunden des Dotierungsprofils im Randbereich bzw. Übergangsbereich zwischen der abgeschiedenen Mantel- und der abgeschiedenen Kernschicht.

2. Verfahren nach Anspruch 1, dadurch gekennzeichnet, daß die Abscheidung der porösen Schicht unterhalb von 1200° C stattfindet.

3. Verfahren nach Anspruch 1 oder 2, dadurch gekennzeichnet, daß das Verglasen bei Temperaturen oberhalb von 1500° C stattfindet.

4. Verfahren nach einem der Ansprüche 1 bis 3, dadurch gekennzeichnet, daß der Kernbereich hautpsächlich mit Germanium und der Mantelbereich hauptsächlich mit Phosphor und Fluor dotiert wird.

5. Verfahren nach einem der Ansprüche 1 bis 4, dadurch gekennzeichnet, daß die Abscheidung der dotierten Kern- und Mantelschichten in etwa 40 Schritten stattfindet, während die Verglasung in einem Schritt durchgeführt wird.

6. Verfahren nach einem der Ansprüche 1 bis 5, dadurch gekennzeichnet, daß während der Diffusionsbehandlung chlorhaltige Gase in das Quarzrohr eingeleitet werden.

## Claims

1. Method for making a preform for optical fibres by means of internal coating of a quartz tube with a sheath layer and a core layer, sheath layer and core layer being deposited as porous layers and these layers being subsequently subjected to a heat and diffusion treatment, during which gases are introduced into the interior of the quartz tube for drying and for material transport, and the deposited layers being subsequently vitrified, having an equalization of the inhomogeneities of the doping and a rounding of the doping profile in the edge region or transition region between the deposited sheath layer and the deposited core layer.

2. Method according to Claim 1, characterized in that the deposition of the porous layer takes place below 1200°C.

3. Method according to Claim 1 or 2, characterized in that the vitrification takes place at temperatures above 1500°C.

4. Method according to one of Claims 1 to 3, characterized in that the core region is doped principally with germanium and the sheath region is doped principally with phosphorus and fluorine.

5. Method according to one of Claims 1 to 4, characterized in that the deposition of the doped core layers and sheath layers takes place in approximately 40 steps, while the vitrification is carried out in one step.

6. Method according to one of Claims 1 to 5, characterized in that chlorine-containing gases are introduced into the quartz tube during the diffusion treatment.

## Revendications

1. Procédé pour fabriquer une préforme pour fibres optiques par enduction interne d'un tube de quartz avec une couche d'enveloppement et une couche à coeur, la couche d'enveloppement et la couche à coeur étant déposées sous la forme de couches poreuses et ces couches étant soumises ensuite à un traitement thermique et à un traitement de diffusion, pendant lesquels des gaz sont introduits à l'intérieur du tube de quartz pour sécher et pour transporter les matières et les couches déposées étant ensuite vitrifiées, en compensant le défaut d'homogénéité du dopage et en arrondissant le profil du dopage dans la zone de bordure ou dans la zone de transition entre la couche d'enveloppement déposée et la couche à coeur déposée.

2. Procédé selon la revendication 1, caractérisé en ce que le dépôt de la couche poreuse a lieu en-dessous de 1200°C.

3. Procédé selon la revendication 1 ou 2, caractérisé en ce que la vitrification a lieu à des températures en-dessus de 1500°C.

4. Procédé selon l'une des revendications 1 à 3, caractérisé en ce que la zone à coeur est essentiellement dopée au germanium et la zone d'enveloppement principalement au phosphore et au fluor.

5. Procédé selon l'une des revendications 1 à 4, caractérisé en ce que le dépôt des couches dopées du coeur et de l'enveloppement a lieu en environ 40 séquences, tandis que la vitrification est exécutée en une séquence.

6. Procédé selon l'une des revendicatiions 1 à 5, caractérisé en ce que pendant le traitement de diffusion on introduit des gaz contenant du chlore dans le tube de quartz.
